# EUROPÄISCHE PATENTSCHRIFT

(11) **EP 1 064 655 B1**
(45) Veröffentlichungstag und Bekanntmachung des Hinweises auf die Patenterteilung: **03.07.2002**
(21) Anmeldenummer: 99919043.2
(22) Anmeldetag: 08.03.1999
(51) Int. Cl.: G21C 19/18

(54) **VERFAHREN UND VORRICHTUNG ZUM TRANSFER EINES GEGENSTANDES ZWISCHEN FLUIDGEFÜLLTEN BEHÄLTERN**
METHOD AND DEVICE FOR TRANSFERRING AN OBJECT BETWEEN FLUID-FILLED CONTAINERS
PROCEDE ET DISPOSITIF POUR TRANSFERER UN OBJET ENTRE DES CONTENANTS REMPLIS DE LIQUIDE

(30) Priorität: 19.03.1998 DE 19812071
(43) Veröffentlichungstag der Anmeldung: 03.01.2001
(73) Patentinhaber: Framatome ANP GmbH, 91050 Erlangen (DE)
(72) Erfinder: MEINTKER, Manfred, D-91096 Möhrendorf (DE)
(74) Vertreter: Tergau & Pohl Patentanwälte
(86) Internationale Anmeldenummer: DE9900617
(87) Internationale Veröffentlichungsnummer: WO9948105

(56) Entgegenhaltungen:
- FR-A- 2 234 637
- PATENT ABSTRACTS OF JAPAN vol. 097, no. 002, 28. Februar 1997 (1997-02-28) & JP 08 261016 A (HITACHI LTD), 8. Oktober 1996 (1996-10-08)
- PATENT ABSTRACTS OF JAPAN vol. 098, no. 005, 30. April 1998 (1998-04-30) & JP 10 026415 A (MITSUBISHI HEAVY IND LTD), 27. Januar 1998 (1998-01-27)

## Beschreibung

Die Erfindung bezieht sich auf ein Verfahren zum Transfer eines Gegenstandes, insbesondere eines nuklearen Brennelementes, von einem fluidgefüllten ersten Behälter in einen fluidgefüllten zweiten Behälter oder in entgegengesetzter Richtung, wobei die Innenräume der Behälter durch ein Verbindungselement verbunden sind und eine Transporteinrichtung zum Bewegen des Gegenstandes durch das Verbindungselement vorhanden ist. Die Erfindung betrifft auch eine Vorrichtung zum Transfer eines Gegenstandes, insbesondere eines nuklearen Brennelementes, von einem fluidgefüllten ersten Behälter in einen fluidgefüllten zweiten Behälter oder in entgegengesetzter Richtung,
- mit einem die Innenräume der Behälter verbindenden Verbindungselement und
- einer Transporteinrichtung zum Bewegen des Gegenstandes durch das Verbindungselement.

In Kernkraftwerken befindet sich der nukleare Brennstoff in den Brennelementen, die im Reaktorkern angeordnet sind. Der nukleare Brennstoff erzeugt im Reaktorkern Wärme, die durch ein Reaktorkühlmittel und einen Reaktorkühlkreislauf der weiteren Nutzung zugeführt wird. Das Reaktorkühlmittel ist mit einem Neutronenabsorber, insbesondere mit Bor oder Borsäure, versetzt, um zusammen mit anderen Einrichtungen die Unterkritikalität des Reaktorkerns zu gewährleisten.

Sobald ein bestimmter Anteil an Kernbrennstoff in den Brennelementen abgebrannt ist, mussen die Brennelemente in dem Reaktorkern gegen neue Brennelemente ausgetauscht werden. Die abgebrannten Brennelemente werden üblicherweise in einem Brennelementlagerbecken zwischengelagert, das zur Nachkühlung der abgebrannten Brennelemente mit Wasser gefüllt ist. Die neuen Brennelemente werden gewöhnlich im gleichen Brennelementlagerbecken vorgehalten. Im Brennelementlagerbecken ist die Unterkritikalität eines Brennelementes in der Regel allein durch die Geometrie und Materialzusammensetzung der Lagergestelle gewährleistet. Eine Borierung des Wassers ist deshalb dort nicht notwendig.

Ein Austausch der abgebrannten Brennelemente erfordert nun einen Transfer eines abgebrannten Brennelementes aus dem Reaktorkern in das Brennelementlagerbecken und einen Transfer eines neuen Brennelementes aus dem Brennelementlagerbecken in den Reaktorkern. Aus Gründen der Brennelementkühlung muß der Transfer jeweils unter Wasser durchgeführt werden.

Ein zum Zwecke des Transfers geeignetes Brennstoff-Transfersystem ist in der US-Patentschrift US 5,291,532 beschrieben. Dieses System weist einen oberhalb des Reaktorkerns angeordneten Förderwagen auf, mit Hilfe dessen ein abgebranntes Brennelement zunächst senkrecht nach oben aus dem Reaktorkern transportiert und anschließend unter Fortbewegung des Förderwagens in ein seitlich neben dem Reaktorkern angeordnetes Transferbecken transportiert werden kann. Von dort wird das Brennelement schließlich in ein Brennelementlagerbecken weitertransportiert. Ein solches Brennelement-Transfersystem, bei dem die Brennelemente oberhalb des Reaktorkerns, und im Falle des beschriebenen Druckwasserkernreaktors auch oberhalb des Reaktordruckbehälters, in das seitlich entfernte Brennelementlagerbecken transportiert werden, ist aufwendig und benötigt eine große Menge an borhaltigem Wasser.

Ein anderes Konzept sieht deshalb vor, daß die Reaktorgrube, also derjenige Teil des Containments, der den Reaktordruckbehälter und den Reaktorkern beinhaltet, und das Brennelementlagerbecken in etwa auf gleicher Höhe angeordnet und durch eine in Bodennähe angeordnete Röhre miteinander verbunden sind. Ein nach diesem Konzept arbeitendes und zum Einsatz in wassergekühlten Reaktoren geeignetes Brennelement-Transfersystem ist in der US-Patentschrift US 4,053,067 offenbart. Dieses Brennelement-Transfersystem sieht vor, daß der den Reaktorkern beinhaltende Containment-Bereich über eine unterhalb der Wasseroberfläche im wesentlichen horizontal angeordnete Röhre mit dem Brennelementlager verbunden ist. Zum Transfer eines Brennelementes wird das Containment, insbesondere die Reaktorgrube, mit boriertem Wasser bis zu einem bestimmten Niveau gefüllt, das ausreicht, um die vertikal im Reaktorkern angeordneten Brennelemente aus dem Kern herauszuziehen und neben dem Kern vor der Röhre zu positionieren. Mit Hilfe eines Schwenkmechanismus wird das Brennelement in eine horizontale Position gebracht und dabei auf einen Wagen gelegt. Der schienengebundene Wagen transportiert anschließend das Brennelement aus dem Containment durch die Röhre zu dem Brennelementlager. Der Transport in entgegengesetzter Richtung funktioniert ähnlich.

Ein ähnlich arbeitendes Brennelement-Transfersystem, das ebenfalls eine Transferröhre zwischen dem Containment und dem Brennelementlager sowie einen durch die Transferröhre fahrbaren Beförderungswagen aufweist, war am 01.08.1998 um 15:26 Uhr unter der Internet-Adresse
"http://www.nrc.gov/nrc/educate/reactor/12-refuel/indexfr.html" beschrieben.

Auch zur Anwendung in natriumgekühlten Kernreaktoren wurden Brennelement-Transfersysteme entwickelt, die eine Transferröhre zwischen dem Reaktordruckbehälter und einem Lagerbehälter aufweisen. Die in der US-Patentschrift US 4,096,031 dargestellte Transferröhre ist bezüglich der Horizontalen geneigt zwischen dem Lagerbehälter und dem Reaktordruckbehälter angeordnet. Die US-Patentschrift US 4,069,099 zeigt eine nicht-geradlinige Transferröhre. Vielmehr weist diese Transferröhre eine V-Form auf, so daß die Brennelemente nicht in eine im wesentlichen horizontale Lage gebracht werden müssen, bevor sie durch die Transferröhre transportiert werden können. Vielmehr genügt es, ein Brennelement innerhalb der V-förmigen Transferröhre leicht seitlich aus dem Reaktordruckbehälter herauszukippen, um das Brennelement weiter transportieren zu können.

Auch für den Europäischen Druckwasserreaktor (EPR) ist vorgesehen, den Brennelementwechsel mit Hilfe einer Transferröhre zwischen dem Containment-Inneren und dem Brennelementlagerbecken zu bewerkstelligen. Beispielsweise ist in der Zeitschrift "Nuclear Engineering International", Oktober 1997, Seite 14 ff, sowie auf dem zugehörigen Poster, ein Transfersystem mit einer horizontal angeordneten Transferröhre beschrieben bzw. gezeichnet.

Alle röhrenbasierten Brennelement-Transfersysteme haben den Nachteil gemeinsam, daß die flüssigkeitsgefüllten Behälter, zwischen denen der Brennelementtransfer stattfindet, durch die Transferröhre verbunden sind, so daß ein Austausch der Flüssigkeiten in den Behältern stattfinden kann. Wie bereits erwähnt, enthält das Reaktorkühlmittel im Reaktordruckbehälter und im Reaktorkühlkreislauf boriertes Wasser (Borwasser). Mit Borwasser gleicher oder ähnlicher Konzentration, das aus einem gesonderten Borwasser-Vorratsbehälter zugeführt wird, wird im Falle des Brennelementwechsels auch die Reaktorgrube im Containment geflutet, damit die Unterkritikalität der im Reaktorkern verbleibenden Brennelemente nach dem Öffnen des Reaktordruckbehälters gewährleistet bleibt. Da während des Brennelementtransfers auch ein Flüssigkeitsaustausch zwischen dem Brennelementlagerbecken und dem Reaktorkern über die Transferröhre und das geflutete Innere des Containments stattfinden kann, muß - um die Unterkritikalität des Reaktorkerns auch weiterhin zu gewährleisten - auch die Flüssigkeit im Brennelementlagerbecken vor Öffnen der Transferröhre auf die gleiche Borkonzentration eingestellt werden, wie sie in der Reaktorgrube und im Reaktorkern vorherrscht. Zum Betrieb der bekannten Brennelement-Transfersysteme wird also eine große Menge an teurem borhaltigen Wasser benötigt.

Insbesondere falls in dem Kernkraftwerk Reaktorkerne eingesetzt werden, mit denen ein besonders hoher Abbrand erzielbar ist, muß beim Brennelementwechsel eine besonders starke Neutronenabsorption im Reaktorkühlmittel gewährleistet bleiben. Hierzu ist eine besonders hohe Konzentration des als Neutronenabsorber wirksamen Borisotops mit der Massenzahl 10 (B10) im Reaktorkühlkreislauf erforderlich, d.h. es muß Borsäure mit einem durch einen Isotopentrennprozeß künstlich erhöhten Anteil dieses Isotops eingesetzt werden. Derartige Borsäure ist außerordentlich teuer, so daß ein Bedarf besteht, mit einer deutlich kleineren Menge als bisher auszukommen.

Der Erfindung liegt demzufolge die Aufgabe zugrunde, ein Verfahren als auch eine Vorrichtung anzugeben, mit Hilfe derer ein Gegenstand durch eine zwischen zwei Behältern angeordnete Röhre transportiert werden kann, ohne daß sich Fluid in einem der Behälter mit Fluid aus dem anderen Behälter vermischt. Bezogen auf den Bereich der Kerntechnik heißt dies, daß ein Brennelementtransfer mit geringem Einsatz an neutronenabsorbierendem Kühlmittel, insbesondere an Borsäure oder an mit B10 angereicherter Borsäure, möglich sein soll. Es soll zumindest eine geringere Menge des genannten neutronenabsorbierenden Kühlmittels erforderlich sein als bei den bisher bekannt gewordenen röhrenbasierten Brennelement-Transfersystemen.

Die auf ein Verfahren bezogene Aufgabe wird gemäß der Erfindung dadurch gelöst, daß in einem dem ersten Behälter zugewandten ersten Teil des Verbindungselementes eine aus dem ersten Behälter ausfließende erste Fluidströmung aufrechterhalten wird, während der Gegenstand unter Aufrechterhaltung der ersten Fluidströmung durch das Verbindungselement transportiert wird.

Der erste Teil des Verbindungselementes mündet z.B. unmittelbar in den ersten Behälter. Bei dem Gegenstand handelt es sich insbesondere um ein Brennelement.

Die Erfindung geht von der Überlegung aus, daß der erste Behälter und der zweite Behälter durch ein Verbindungselement verbunden werden können, ohne daß Fluid von dem zweiten Behälter in den ersten Behälter gelangt, falls aus dem ersten Behälter ständig Fluid in das Verbindungselement einströmt. Dadurch wird der Vorteil erreicht, daß der Gegenstand durch das Verbindungselement transportiert werden kann, ohne daß das Fluid in dem ersten Behälter mit Fluid aus dem zweiten Behälter vermischt wird.

Wären die beiden Behälter durch das Verbindungselement verbunden ohne daß die erste Fluidströmung herrschen würde, dann würde beispielsweise schon durch den Transport des Gegenstandes von dem zweiten in den ersten Behälter Fluid aus dem zweiten Behälter mit in den ersten Behälter eingebracht. Darüber hinaus würden - auch ohne daß ein Transport stattfindet - kleine Druckunterschiede zwischen den Behältern gemäß dem Prinzip der kommunizierenden Röhren zu einem Fluidaustausch zwischen den Behältern fuhren. Durch die quasi als Sperrströmung wirkende erste Fluidstromung wird ein Einströmen von Fluid aus dem zweiten in den ersten Behälter verhindert.

Nach einer bevorzugten Ausgestaltung des Verfahrens wird während des Transportierens des Gegenstandes durch das Verbindungselement in einem dem zweiten Behälter zugewandten zweiten Teil des Verbindungselementes eine aus dem zweiten Behälter ausfließende zweite Fluidströmung aufrechterhalten. Dadurch wird in vorteilhafter Weise auch verhindert, daß während des Transportierens des Gegenstandes in beliebiger Richtung zwischen den Behältern Fluid aus dem ersten Behälter in den zweiten Behälter gebracht wird.

Nach einer Weiterbildung des Verfahrens wird vor dem Erzeugen der ersten bzw. der zweiten oder der ersten und der zweiten Fluidströmung an einer ersten Mündung des Verbindungselementes in dem ersten Behälter und an einer zweiten Mündung des Verbindungselementes in dem zweiten Behälter ein im wesentlichen identischer statischer Druck eingestellt. Dadurch wird sichergestellt, daß keine treibende Kraft vorhanden ist, die einen Fluidstrom von einem Behälter in den anderen Behälter antreiben könnte. Die Auswirkungen eventuell unterschiedlicher Luftdrücke über den (nach oben offenen) Behältern oder unterschiedlicher Temperaturen oder Dichten in den Fluiden in den Behältern sind dabei berücksichtigbar. Nachdem der beschriebene Druckausgleich durchgeführt wurde, kann beispielsweise das bis dahin noch verschlossene Verbindungselement geöffnet werden, ohne daß sofort eine (starke) Fluidströmung zwischen den Behältern einsetzen würde. Anschließend können dann z.B. die erste und ggf. zusätzlich die zweite Fluidströmung aufgebaut werden, die dann allenfalls noch einen sehr geringen statischen Druckunterschied zwischen den Behältern ausgleichen müssen. Die Wirkung des Verfahrens wird also durch den beschriebenen Druckausgleich verstärkt.

Der beschriebene Druckausgleich bringt den Vorteil mit sich, daß praktisch kein Fluidaustausch zwischen den Behältern stattfinden kann, und daß das Verbindungselement somit während des Auswechseins aller Brennelemente ständig offengehalten werden kann, also keine Schleusenschieber oder dergleichen nötig sind. Dadurch wird eine besonders kurze Brennelementwechselzeit erreicht, wodurch Kosten eingespart werden.

Die erste bzw. die zweite oder die erste und die zweite Fluidströmung werden bevorzugt dadurch erzeugt und/oder aufrechterhalten, daß aus dem Verbindungselement ein Fluid abgeleitet wird. Dadurch läßt sich insbesondere auf einfache Weise sowohl die erste als auch die zweite Fluidströmung erzeugen. Der erste Teil des Verbindungselementes erstreckt sich dann zwischen dem ersten Behälter und einer Stelle, an der das Fluid abgeleitet wird, und der zweite Teil des Verbindungselementes erstreckt sich zwischen dem zweiten Behälter und dieser Stelle.

Beispielsweise wird einem der Behälter mit einer Stromstärke Fluid zugeführt und Fluid mit der gleichen Stromstärke aus dem Verbindungselement abgeleitet. Durch das Zuführen von Fluid wird erreicht, daß der Fluidpegel in den Behältern nicht sinkt, obwohl ständig Fluid aus dem Verbindungselement abgeleitet wird. Durch das Einstellen gleicher Stromstärken bei der Zufuhr und beim Ableiten wird die Konstanz des Fluidpegels gewährleistet. In dem Fall, daß ausschließlich in dem dem ersten Behälter zugewandten ersten Teil des Verbindungselementes die erste Fluidströmung aufrechterhalten wird, wird Fluid bevorzugt dem ersten Behälter zugeführt.

Unter einer Stromstärke wird eine Volumenstrom pro Zeiteinheit verstanden.

Nach einer besonders bevorzugten Ausgestaltung des Verfahrens wird dem ersten Behälter mit einer ersten Stromstärke und dem zweiten Behälter mit einer zweiten Stromstärke Fluid zugeführt und aus dem Verbindungselement Fluid mit einer Entnahmestromstärke abgeleitet, die der Summe der Stromstärken von den Behältern zugeführtem Fluid entspricht. Diese Ausgestaltung eignet sich besonders für den Fall, daß sowohl die erste als auch die zweite Fluidströmung aufrechterhalten werden.

Eine ganz besonders bevorzugte Ausgestaltung des Verfahrens sieht vor, daß ein nukleares Brennelement von dem ersten Behälter, der eine Reaktorgrube eines Kernkraftwerks ist, in den zweiten Behälter, der ein Brennelementlagerbecken eines Kernkraftwerks ist, oder in entgegengesetzter Richtung transferiert wird. Von Vorteil ist dabei, daß das Fluid in dem ersten Behälter und optional das Fluid in dem zweiten Behälter durch den Transport des Brennelementes durch das Verbindungselement hindurch nicht mit dem jeweils anderen Fluid vermischt werden. So kann beispielsweise das Brennelementlagerbecken mit (reinem) Wasser gefüllt sein und auch während eines Brennelementwechsels damit gefüllt bleiben, und die Reaktorgrube und der Reaktordruckbehälter können mit boriertem Wasser gefüllt sein. Eine Vermischung des borierten Wassers in der Reaktorgrube mit dem Wasser in dem Brennelementlagerbecken ist ausgeschlossen, weshalb das Wasser in dem Brennelementlagerbecken nicht boriert werden muß. Das nicht borierte Wasser des Brennelementlagerbeckens kann nicht in die Reaktorgrube gelangen und somit nicht zu einer Kritikalität der dort befindlichen Brennelemente führen. Das borierte Wasser der Reaktorgrube kann bei entsprechender Ausgestaltung des Verfahrens nicht mit der großen Menge an reinem Wasser im Brennelementlagerbecken vermischen, aus der es nur mit immensem Aufwand wieder abgetrennt werden könnte. Dagegen bereitet die Aufbereitung einer aus dem Verbindungselement entnommenen kleinen Menge an Fluid, in dem boriertes Wasser und reines Wasser vermischt ist, keine Probleme.

Die auf eine Vorrichtung bezogene Aufgabe wird gemäß der Erfindung gelöst durch eine Vorrichtung nach dem Oberbegriff des Patentanspruchs 8, die dadurch gekennzeichnet ist, daß sich an dem Verbindungselement eine Entnahmeeinrichtung zum Ableiten von Fluid befindet.

Diese Vorrichtung ist bevorzugt zur Durchführung des Verfahrens nach der Erfindung geeignet.

Die Entnahmeeinrichtung ist bevorzugt so angeordnet, daß Fluid aus dem Verbindungselement an einer Stelle außerhalb der Innenräume der Behälter entnommen wird. Die Entnahmeeinrichtung ist z.B. am Verbindungselement an einer Stelle außerhalb der Innenräume der Behälter angebunden. Die Stelle befindet sich bevorzugt näherungsweise mittig zwischen den Behältern an dem Verbindungselement.

Die Entnahmeeinrichtung umfaßt beispielsweise eine Meß- und/oder Stelleinrichtung zur Messung bzw. zum Einstellen einer Entnahmestromstärke. Damit läßt sich Fluid dosiert aus dem Verbindungselement ableiten, um Fluidströmungen im Verbindungselement, z.B. die erste und/oder die zweite Fluidströmung, exakt einzustellen.

Zur Aufnahme des abgeleiteten Fluides kann insbesondere ein Sammelbehälter vorgesehen sein.

Nach einer bevorzugten Ausgestaltung der Vorrichtung umfaßt die Entnahmeeinrichtung eine Entnahmeleitung, die bis zu einer Scheitelstelle nach oben geführt ist. Daraus ergibt sich der Vorteil, daß der Fluidpegel in jedem der Behälter nicht unter eine Höhe sinken kann, auf der die Scheitelstelle liegt.

Zur Verbesserung dieses Effektes kann die Scheitelstelle über eine Absperrarmatur mit der umgebenden Atmosphäre verbindbar sein.

Die Scheitelstelle befindet sich z.B. geringfügig unterhalb eines Fluidpegels in einem der Behälter. Ein solcher Fluidpegel ist z.B. ein Fluidpegel, der in einem der Behälter eingestellt und/oder aufrechterhalten werden soll.

Andere Weiterbildungen der Vorrichtung weisen eine erste Druckmeßeinrichtung zur Messung eines ersten Druckes in dem ersten Behälter in Höhe der Mündung des Verbindungselementes bzw. eine zweite Druckmeßeinrichtung zur Messung eines zweiten Druckes in dem zweiten Behälter in Höhe der Mündung des Verbindungselementes auf. Bei Kenntnis des ersten und des zweiten Druckes läßt sich auf die treibende Kraft schließen, die zu einem Fluidaustausch zwischen des Behältern führen könnte.

Hierzu ist beispielsweise eine mit den beiden Druckmeßeinrichtungen verbundene Auswerteeinheit zur Bestimmung der Druckdifferenz zwischen dem ersten Druck und dem zweiten Druck vorhanden. Wird die Druckdifferenz vor dem Erzeugen einer Fluidströmung in dem Verbindungselement nahezu auf Null eingestellt, wie dies nach einer Ausgestaltung des Verfahrens nach der Erfindung vorgesehen ist, dann läßt sich die treibende Kraft für einen Fluidaustausch zwischen den Behältern minimieren. Aber auch während einer Fluidströmung im Verbindungselement läßt sich dadurch die treibende Kraft und eine davon angetriebene Strömung zwischen den Behältern gering halten.

Eine andere Weiterbildung der Vorrichtung erlaubt ebenfalls einen Ausgleich einer gegebenenfalls zwischen den Behältern vorhandenen Druckdifferenz. Hierzu ist auf Höhe der Mündungen des Verbindungselementes je eine Ablauföffnung je eines Ablaufrohres vorhanden. Die Ablaufrohre münden in ein gemeinsames Rohr, das seinerseits zur Entnahmeeinrichtung geführt ist und insbesondere in der Entnahmeleitung mündet. Das Rohr kann insbesondere ein Ventil aufweisen.

Vorzugsweise sind die Stromungswiderstände der Ablaufrohre im wesentlichen gleich groß, z.B. sind die Rohrquerschnitte identisch.

Die Durchmesser der Ablaufrohre sind im Vergleich zu einem Durchmesser des Verbindungselementes klein. Sie betragen z.B. weniger als 10%, bevorzugt weniger als 5%, eines Durchmessers des Verbindungselementes.

Bei geöffnetem Ventil findet ein Druckausgleich zwischen den Behältern statt, ohne daß Fluid von einem Behälter in den anderen gelangen könnte.

Insbesondere ist der erste Behälter ein Brennelementlagerbekken oder eine Reaktorgrube eines Kernkraftwerks und der zweite Behälter eine Reaktorgrube bzw. ein Brennelementlagerbecken eines Kernkraftwerks. Hierbei ergibt sich der Vorteil, daß in dem Brennelementlagerbecken und in der Reaktorgrube Wasser mit unterschiedlichen Borgehalten enthalten sein kann, ohne daß es zu einer Veränderung des Borgehaltes in einem der Behälter und damit insbesondere zu einer Verminderung des Borgehaltes in dem borierten Wasser in einem der Behälter, insbesondere in der Reaktorgrube, kommen kann.

Beispielsweise ist eine Leitung zum Weiterleiten des abgeleiteten Fluides zu einer Aufbereitungsanlage vorhanden, in der im Fluid enthaltenes Wasser von einer im Fluid enthaltenen borhaltigen Substanz trennbar ist. Der Borgehalt in dem mit der Entnahmeeinrichtung abgeleiteten Fluid entspricht in der Regel weder dem Borgehalt des Fluides aus dem ersten Behälter noch dem Borgehalt des Fluids aus dem zweiten Behälter, so daß eine unmittelbare Wiederverwendung des abgeleiteten Fluides in der Regel nicht möglich ist. Deshalb ist es von Vorteil, eine in dem Fluid enthaltene borhaltige, teure Substanz einer Aufbereitungsanlage zuzuführen, so daß eine Wiederverwendung der abgetrennten borhaltigen Substanz möglich wird.

Weitere Ausgestaltungen der Vorrichtung weisen ein an einem ersten Zulauf in den ersten Behälter angebrachtes Dosierventil auf, mit dem ein vorgebbarer erster Fluidstrom einstellbar ist, bzw. ein an einem zweiten Zulauf in den zweiten Behälter angebrachtes zweites Dosierventil, mit dem ein vorgebbarer zweiter Fluidstrom einstellbar ist. Damit wird es möglich, den Fluidpegel in den beiden Behältern annähernd gleich zu halten sowie eine gesamte Zufuhrstromstärke einzustellen, die der Entnahmestromstärke entspricht. Dadurch wird in vorteilhafter Weise auch verhindert, daß während des Ableitens von Fluid aus dem Verbindungselement der Fluidpegel in einem der Behälter oder in beiden Behältern sinkt.

Zwei Ausführungsbeispiele einer Vorrichtung nach der Erfindung sowie die Funktionsweise eines Beispiels für ein Verfahren nach der Erfindung werden anhand der Zeichnung näher erläutert. Es zeigen
- FIG 1: ein erstes Ausführungsbeispiel und
- FIG 2: ein zweites Ausführungsbeispiel einer Vorrichtung zum Transfer eines Gegenstandes zwischen zwei fluidgefüllten Behältern.

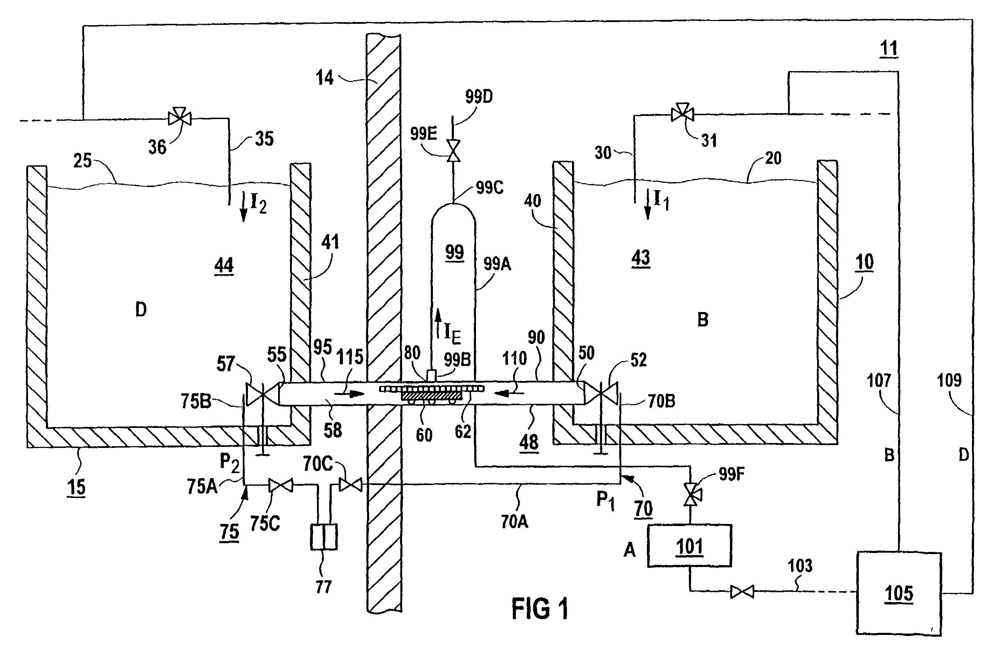

Ein erster Behälter 10 in Figur 1 symbolisiert die Reaktorgrube eines Kernkraftwerkes und wird nachfolgend auch als solche bezeichnet. Die Reaktorgrube 10 befindet sich im Innenraum 11 eines Reaktorgebäudes, z.B. eines Containments, das eine Wand 14 aufweist.

Ein zweiter Behälter 15 stellt schematisiert ein Brennelementlagerbecken dar und wird im folgenden auch als solches bezeichnet.

Die Reaktorgrube 10 wird bei einem Wechsel der sich im (nicht dargestellten) Reaktorkern befindenden Brennelemente bis zu einem Fluidpegel 20 mit einem Fluid B gefüllt, bei dem es sich z.B. um borhaltiges Wasser handelt und das im folgenden als solches bezeichnet wird. Die Reaktorgrube 10 ist in dem genannten gefüllten Zustand schematisch dargestellt.

Das Brennelementlagerbecken 15 ist zur Aufnahme ausgewechselter abgebrannter Brennelemente und zum Vorhalten frischer Brennelemente bis zu einem Fluidpegel 25 mit einem Fluid D gefüllt, welches Deionat ist und nachfolgend so genannt wird. Zum Einspeisen von borhaltigem Wasser B in die Reaktorgrube 10 ist ein erster Zulauf 30 mit einem ersten Dosierventil 31 vorhanden. Gleichfalls existiert für das Brennelementlagerbecken 15 ein zweiter Zulauf 35 mit einem zweiten Dosierventil 36, mit Hilfe derer Deionat D in das Brennelementlagerbecken 15 eingespeist werden kann.

Über je eine Öffnung in einer Seitenwand 40 der Reaktorgrube 10 als auch in einer Seitenwand 41 des Brennelementlagerbeckens 15 sind der Innenraum 43 der Reaktorgrube 10 und der Innenraum 44 des Brennelementlagerbeckens 15 mit Hilfe eines zwischen den genannten Öffnungen angebrachten Verbindungselementes 48 verbunden. Das Verbindungselement 48 hat die Gestalt einer Röhre. An einer ersten Mündung 50 des Verbindungselementes 48 in die Reaktorgrube 10 befindet sich eine erste Abschlußeinrichtung 52. An einer zweiten Mündung 55 des Verbindungselementes 48 in das Brennelementlagerbecken 15 befindet sich eine zweite Abschlußeinrichtung 57. Im Innenraum 58 des Verbindungselementes 48 ist eine Transporteinrichtung 60 beweglich, mit Hilfe derer ein Gegenstand 62 durch das Verbindungselement 48 transportiert werden kann. Der Gegenstand 62 ist im dargestellten Ausführungsbeispiel ein Brennelement und wird nachfolgend so bezeichnet. Die Transporteinrichtung 60 kann beispielsweise ein schienengebundener Wagen sein, auf dem das Brennelement 62, wie dargestellt, horizontal liegend durch das Verbindungselement 48 transportiert wird. Während der Zeiten, in denen das Verbindungselement 48 nicht zum Transport von Brennelementen benutzt wird, kann das Verbindungselement 48 mit Hilfe der ersten und der zweiten Abschlußeinrichtung 52 bzw. 57 abgeschlossen werden, und die Innenräume 43, 44 der Reaktorgrube 10 und des Brennelementlagerbeckens 15 können somit fluiddicht voneinander getrennt werden.

Für die weitere Beschreibung des Aufbaus und der Funktion der dargestellten Vorrichtung wird nun angenommen, daß die Abschlußeinrichtungen 52, 57 zunächst verschlossen sind. Vor dem Öffnen der Abschlußeinrichtungen 52, 57 zum Transport eines Brennelementes 62 durch das Verbindungselement 48 wird zunächst ein Druckausgleich zwischen der Reaktorgrube 10 und dem Brennelementlagerbecken 15 hergestellt. Hierzu sind eine erste Druckmeßeinrichtung 70 als auch eine zweite Druckmeßeinrichtung 75 in der Reaktorgrube 10 bzw. im Brennelementlagerbecken 15 vorgesehen.

Die erste Druckmeßeinrichtung 70 umfaßt eine erste Wirkdruckleitung 70A, die mit einer ersten Öffnung 70B einen ersten Druck p₁ im Innenraum 43 der Reaktorgrube 10 (im borhaltigen Wasser B) in der Nähe der ersten Mündung 50 aufnimmt. Über ein erstes Ventil 70C ist die erste Wirkdruckleitung 70A mit einer Auswerteeinheit 77 verbunden. Gleichfalls mit der Auswerteeinheit 77 verbunden ist eine zur zweiten Druckmeßeinrichtung 75 gehörende zweite Wirkdruckleitung 75A, die mit einer zweiten Öffnung 75B in der Nähe der zweiten Mündung 55 des Verbindungselementes 48 im Brennelementlagerbecken 15 endet und dort einen zweiten Druck p₂ im Deionat D aufnimmt. Die zweite Druckmeßeinrichtung 75 weist ein zweites Ventil 75C auf. Die Öffnungen 70B, 75B sind exakt auf (der geodätischen) Höhe der Mündungen 50 bzw. 55 angeordnet, um einen Einfluß unterschiedlicher Dichten an den Meßorten zu vermeiden.

In der Auswerteeinheit 77 wird die Differenz aus dem ersten Druck p₁ und dem zweiten Druck p₂ gebildet (Δp = p₂ - p₁). Über den ersten Zulauf 30 und/oder über den zweiten Zulauf 35 werden die Fluidpegel 20, 25 in der Reaktorgrube 10 bzw. im Brennelementlagerbecken 15 derart verändert, daß der von der Auswerteeinheit 77 ermittelte Differenzdruck Δp näherungsweise Null wird.

Nach diesem Druckausgleich werden die Abschlußeinrichtungen 52, 57 geöffnet. Infolge des durchgeführten Druckausgleichs ist nun keine, zumindest keine starke treibende Kraft für eine Strömung zwischen der Reaktorgrube 10 und dem Brennelementlagerbecken 15 vorhanden.

Es bleiben aber möglicherweise geringe Strömungen, beispielsweise angetrieben durch Temperatur- und/oder Konzentrationsgradienten, welche trotz des durchgeführten Druckausgleichs zu einem Fluidaustausch zwischen der Reaktorgrube 10 und dem Brennelementlagerbecken 15 führen könnten.

Nach dem Öffnen der Abschlußeinrichtungen 52, 57 wird mit dem Transport eines Brennelementes 62 mittels der Transporteinrichtung 60 durch das Verbindungselement 48 begonnen. Dabei würde aber nun in jedem Fall wegen des Bewegens der Transporteinrichtung 60 mit dem Brennelement 62 durch das Verbindungselement 48 Fluid von dem einen in den anderen der Behälter gebracht, da auch das Fluid in dem nach dem Öffnen der Abschlußeinrichtungen 52, 57 fluidgefüllten Verbindungselement 48 in Bewegung gebracht wird.

Deshalb ist an einer Entnahmestelle 80, welche das Verbindungselement 48 in einen ersten Teil 90 und einen zweiten Teil 95 teilt, eine Entnahmeeinrichtung 99 zum Ableiten von Fluid A aus dem Verbindungselement 48 vorhanden. Der erste Teil 90 des Verbindungselementes 48 ist der Reaktorgrube 10, der zweite Teil 95 dem Brennelementlagerbecken 15 zugewandt.

Die Entnahmeeinrichtung 99 umfaßt eine Entnahmeleitung 99A, die ausgehend von einem an der Entnahmestelle 80 an dem Verbindungselement 48 angebrachten Entnahmestutzen 99B zunächst senkrecht nach oben bis zu einer Scheitelstelle 99C geführt ist. An der Scheitelstelle 99C zweigt eine Leitung 99D ab, die mit Hilfe einer Absperrarmatur 99E verschließbar ist.

Nach der Scheitelstelle 99C ist die Entnahmeleitung 99A nach unten geführt und über eine Meß- und/oder Stelleinrichtung 99F mit einem Sammelbehälter 101 verbunden. Von dem Sammelbehälter 101 führt eine Ruckfuhrleitung 103 für abgeleitetes Fluid A zu einer Aufbereitungsanlage 105.

Der Druck, welcher die Strömung des abgeleiteten Fluids A antreibt, ergibt sich aus der Höhendifferenz zwischen den Fluidpegeln 20, 25 und der Lage des Sammelbehälters 101. Das abgeleitete Fluid A strömt infolge eines Siphoneffektes selbsttätig durch die U-formige Entnahmeleitung 99A in den Sammelbehälters 101. Durch Offnen der Absperrarmatur 99E ist der Siphoneffekt und somit die Strömung des abgeleiteten Fluids A in den Sammelbehalter 101 unterbindbar.

Das abgeleitete Fluid A bestent aus einem Gemisch von Deionat D und borhaltigem Wasser B, d.h. es handelt sich um Wasser mit einem geringeren Borgehalt als das Wasser B in der Reaktorgrube 10. Das abgeleitete Fluid A kann also der Reaktorgrube 10 nicht unmittelbar zugeführt werden, da dies zu einer Veränderung des Borgehaltes des borhaltigen Wassers B in der Reaktorgrube 10 führen würde. Dies würde dazu führen, daß auch der Reaktorkern nicht mehr ausreichend mit Bor versorgt würde, so daß infolge mangelnder Neutronenabsorption eine Kritikalität des Reaktorkerns eintreten könnte. In der Aufbereitungsanlage 105 wird deshalb das abgeleitete Fluid A, beispielsweise mit Hilfe geeigneter Ionentauscher, in einen Anteil mit stark borhaltigem Wasser B und einen Anteil mit Deionat D aufgespaltet. Diese Anteile werden über eine Rückführleitung 107 für borhaltiges Wasser B bzw. eine Rückführleitung 109 für Deionat D der Reaktorgrube 10 bzw. dem Brennelementlagerbecken 15 zugeführt. In dem gezeichneten Beispiel münden die Rückführleitungen 107, 109 in dem ersten Zulauf 30 bzw. in dem zweiten Zulauf 35.

Durch das Ableiten von Fluid A mit Hilfe der Entnahmeeinrichtung 99 aus dem Verbindungselement 48 werden in dem Verbindungselement 48 eine erste Fluidströmung 110 sowie eine zweite Fluidströmung 115 erzeugt. Die erste Fluidströmung 110 strömt aus der Reaktorgrube 10 zur Entnahmestelle 80, die zweite Fluidströmung 115 strömt aus dem Brennelementlagerbekken 15 zu dieser Entnahmestelle 80. Dadurch wird erreicht, daß auch während eines Transports eines Brennelementes 62 mit Hilfe der Transporteinrichtung 60 durch das Verbindungselement 48 ein Strömen von Deionat D aus dem Brennelementlagerbecken 15 in die Reaktorgrube 10 und ein Strömen von borhaltigem Wasser B aus der Reaktorgrube 10 in das Brennelementlagerbecken 15 unterbunden ist. Dies gilt sowohl für einen Transfer eines abgebrannten Brennelementes aus der Reaktorgrube 10 in das Brennelementlagerbecken 15 als auch für einen Transfer eines frischen Brennelementes aus dem Brennelementlagerbecken 15 in die Reaktorgrube 10. Für die Reaktorgrube 10 wirkt die mittels des Pfeiles 110 angedeutete erste Fluidströmung als Sperrstromung, für das Brennelementlagerbecken 15 die durch den Pfeil 115 angedeutete zweite Fluidströmung. Die erste Fluidströmung 110 und die zweite Fluidströmung 115 vereinigen sich an der Entnahmestelle 80 und werden gemeinsam durch die Entnahmeeinrichtung 99 aus dem Verbindungselement 48 abgeleitet.

Im Vergleich zum Volumen der Reaktorgrube 10 und des Brennelementlagerbeckens 15 wird nur ein geringes Volumen an Fluid A abgeleitet. Um während des Transportes eines Brennelementes 62 durch das Verbindungselement 48, d.h. während des Ableitens von Fluid A mit Hilfe der Entnahmeeinrichtung 99 aus dem Verbindungselement 48, die Fluidpegel 20, 25 in der Reaktorgrube 10 bzw. im Brennelementlagerbecken 15 trotzdem nicht ungewünscht absinken zu lassen, wird der Reaktorgrube 10 durch den ersten Zulauf 30 mit einer ersten Fluidstromstärke I₁ borhaltiges Wasser B sowie dem Brennelementlagerbecken 15 durch den zweiten Zulauf 35 Deionat D mit einer zweiten Fluidstromstärke I₂ zugeführt.

Mit Hilfe der Entnahmeeinrichtung 99 wird aus dem Verbindungselement 48 Fluid A mit einer Entnahmestromstärke I_{E} abgeleitet. Die Entnahmestromstärke I_{E} ist an der Meßund/oder Stelleinrichtung 99F meß- und/oder einstellbar. Die erste Fluidstromstärke I₁, die zweite Fluidstromstärke I₂ und die Entnahmestromstärke I_{E} werden so eingestellt, daß die Summe aus der ersten Fluidstromstärke I₁ und der zweiten Fluidstromstärke I₂ die Entnahmestromstärke I_{E} ergibt (I_{E} = I₁ + I₂). Bevorzugt ist dabei eine solche Entnahmestromstärke I_{E}, die in dem Verbindungselement 48 eine Strömungsgeschwindigkeit von ca. 0,01 m/s ergibt.

Der zeitliche Ablauf des Einstellens der Fluidströmungen ist beispielsweise so, daß nach dem Öffnen der Abschlußeinrichtungen 52, 57 zunächst die erste Fluidstromstärke I₁ und die zweiten Fluidstromstärke I₂ eingestellt werden, und daß dann die Entnahmestromstärke I_{E} eingestellt wird. Langfristige Veränderungen der Fluidpegel 20, 25 werden durch Nachstellen der erste Fluidstromstärke I₁ und/ oder der zweiten Fluidstromstärke I₂ ausgeglichen.

Sollte während des Brennelementtransfers durch das beidseitig offene Verbindungselement 48 wider Erwarten eine unvorhersehbare Störung auftreten, dann werden eine der Abschlußeinrichtungen 52, 57 oder beide geschlossen. Die Abschlußeinrichtungen 52, 57 sind aus sicherheitstechnischen Gründen redundant ausgeführt. Aus den gleichen Gründen ist die Transporteinrichtung 60 nicht durch die Abschlußeinrichtungen 52, 57 hindurch bewegbar, so daß diese jederzeit geschlossen werden können.

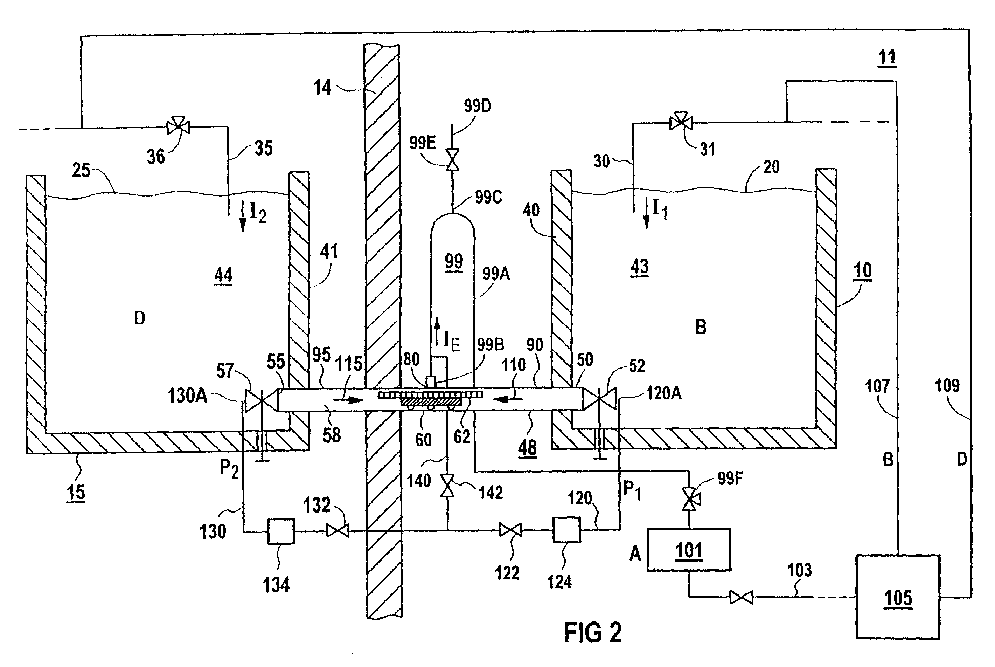

Bei dem in Figur 2 dargestellten zweiten Ausführungsbeispiel einer Vorrichtung nach der Erfindung ist eine andere Möglichkeit demonstriert, einen Druckausgleich zwischen den Behältern 10, 15 herbeizuführen, beispielsweise wie bereits beschrieben vor einem Öffnen der Abschlußeinrichtungen 52, 57. Im Gegensatz zu dem in Figur 1 dargestellten Ausführungsbeispiel sind hierbei keine Druckmeßeinrichtungen 70, 75 vorhanden. Stattdessen sind ein erstes Ablaufrohr 120 und ein zweites Ablaufrohr 130 vorhanden, deren Ablauföffnungen 120A, 130A in der Nähe der ersten Mündung 50 bzw. der zweiten Mündung 55 des Verbindungselementes 48 angeordnet sind. Die Ablauföffnungen 120A, 130A befinden sich exakt auf der geodätischen Höhe der Mündungen 50 bzw. 55. Die Durchmesser der Ablaufrohre 120, 130 sind erheblich kleiner als ein Durchmesser des Verbindungselementes 48. Die Ablaufrohre 120, 130 sind über ein erstes Rückschlagventil 122 bzw. ein zweites Rückschlagventil 132 sowie einen ersten Durchflußmesser 124 bzw. einen zweiten Durchflußmesser 134 in ein gemeinsames Rohr 140 mündend geführt. Das Rohr 140 mündet seinerseits in der Entnahmeleitung 99A in der Nähe der Entnahmestelle 80. Das Rohr 140 ist über ein Ventil 142 geführt.

Der hydraulische Widerstand zwischen der Ablauföffnung 120A des ersten Ablaufrohres 120 und der Mündung des ersten Ablaufrohres 120 in das Rohr 140 sowie der hydraulische Widerstand zwischen der Ablauföffnung 130A des zweiten Ablaufrohres 130 und der Mündung des zweiten Ablaufrohres 130 in das Rohr 140 sind gleich groß. Das bedeutet insbesondere, daß die Leitungsquerschnitte der Ablaufrohre 120, 130 und die Strömungswiderstände der Rückschlagventile 122, 132 sowie der Durchflußmesser 124, 134 in etwa gleich groß sind. Nach Öffnen des Ventils 142 gleichen sich die Drücke in den Behältern 10, 15 an. Beispielsweise strömt aus dem Behälter mit dem höheren Druck Fluid durch das Rohr 140 in die Entnahmeleitung 99A und somit zum Sammelbehälter 101. Ein Strömen dieser Flüssigkeit in den jeweils anderen Behälter ist durch die Rückschlagventile 122, 132 unterbunden. Die Durchflußmesser 124, 134 dienen der zusätzlichen Überwachung des Druckausgleichs.

Mit der Vorrichtung nach dem zweiten Ausführungsbeispiel ist der Druckausgleich zwischen den Behältern auf besonders einfache, kostengünstige und sichere Weise durchführbar.

## Patentansprüche

1. Verfahren zum Transfer eines Gegenstands (62), insbesondere eines nuklearen Brennelements, von einem fluidgefüllten ersten Behälter (10) in einen fluidgefüllten zweiten Behälter (15) oder in entgegengesetzter Richtung, wobei die Innenräume (43, 44) der Behälter (10, 15) durch ein Verbindungselement (48) verbunden sind und eine Transporteinrichtung (60) zum Bewegen des Gegenstands (62) durch das Verbindungselement (48) vorhanden ist,
**dadurch gekennzeichnet, daß** in einem dem ersten Behälter (10) zugewandten ersten Teil (90) des Verbindungselements (48) eine aus dem ersten Behälter (10) ausfließende erste Fluidströmung (110) aufrechterhalten wird, während der Gegenstand (62) unter Aufrechterhaltung der ersten Fluidströmung (110) durch das Verbindungselement (48) transportiert wird.

2. Verfahren nach Anspruch 1,
**dadurch gekennzeichnet, daß** während des Transportierens des Gegenstandes (62) durch das Verbindungselement (48) in einem den zweiten Behälter (15) zugewandten zweiten Teil (95) des Verbindungselementes (48) eine aus dem zweiten Behälter (15) ausfließende zweite Fluidströmung (115) aufrechterhalten wird.

3. Verfahren nach Anspruch 1 oder 2,
**dadurch gekenneichnet**, daß vor dem Erzeugen der ersten Fluidströmung (110) bzw. der zweiten Fluidströmung (115) oder der ersten Fluidströmung (110) und der zweiten Fluidströmung (115) an einer ersten Mündung (50) des Verbindungselementes (48) in dem ersten Behälter (10) und an einer zweiten Mündung (55) des Verbindungselementes (48) in dem zweiten Behälter (15) ein im wesentlichen identischer statischer Druck (p₁≈p₂) eingestellt wird.

4. Verfahren nach einem der Ansprüche 1 bis 3,
**dadurch gekennzeichnet, daß** aus dem Verbindungselement (48) ein Fluid (A) abgeleitet wird.

5. Verfahren nach Anspruch 4,
**dadurch gekennzeichnet, daß** einem der Behälter (10, 15) mit einer Stromstärke (I₁, I₂) Fluid zugeführt wird und Fluid (A) mit der gleichen Stromstärke (I₁, I₂) aus dem Verbindungselement (48) abgeleitet wird.

6. Verfahren nach Anspruch 4,
**dadurch gekennzeichnet, daß** dem ersten Behälter (10) mit einer ersten Stromstärke (I₁) und dem zweiten Behälter (15) mit einer zweiten Stromstärke (I₂) Fluid zugeführt wird und aus dem Verbindungselement (48) Fluid (A) mit einer Entnahmestromstärke (I_{E}) abgeleitet wird, die der Summe der Stromstärken (I₁, I₂) von den Behältern (10, 15) zugeführtem Fluid entspricht.

7. Verfahren nach einem der Ansprüche 1 bis 6,
**dadurch gekennzeichnet, daß** ein nukleares Brennelement von dem ersten Behälter (10), der die Reaktorgrube eines Kernkraftwerks ist, in den zweiten Behälter (15), der das Brennelementlagerbecken eines Kernkraftwerks ist, oder in entgegengesetzter Richtung transferiert wird.

8. Vorrichtung zum Transfer eines Gegenstands (62), insbesondere eines nuklearen Brennelements, von einem fluidgefüllten ersten Behälter (10) in einen fluidgefüllten zweiten Behälter (15) oder in entgegengesetzter Richtung,
- mit einem die Innenräume (43, 44) der Behälter (10, 15) verbindenden Verbindungselement (48) und
- einer Transporteinrichtung (60) zum Bewegen des Gegenstands (62) durch das Verbindungselement (48),
bevorzugt zur Durchführung des Verfahrens nach einem der Ansprüche 1 bis 7,
**dadurch gekennzeichnet, daß** sich an dem Verbindungselement (48) eine Entnahmeeinrichtung (99) zum Ableiten von Fluid (A) befindet.

9. Vorrichtung nach Anspruch 8,
**dadurch gekennzeichnet, daß** die Entnahmeeinrichtung (99) eine Meß- und/ oder Stelleinrichtung (99F) zur Messung bzw. zum Einstellen einer Entnahmestromstärke (I_{E}) umfaßt.

10. Vorrichtung nach Anspruch 8 oder 9,
**gekennzeichnet durch** einen Sammelbehälter (101) zur Aufnahme des abgeleiteten Fluides (A).

11. Vorrichtung nach einem der Ansprüche 8 bis 10,
**dadurch gekennzeichnet, daß** die Entnahmeeinrichtung (99) eine Entnahmeleitung (99A) umfaßt, die bis zu einer Scheitelstelle (99C) nach oben geführt ist.

12. Vorrichtung nach Anspruch 11,
**dadurch gekennzeichnet, daß** sich die Scheitelstelle (99C) geringfügig unterhalb eines Fluidpegels (20, 25) in einem der Behälter (10 bzw. 15) befindet.

13. Vorrichtung nach einem der Ansprüche 8 bis 12,
**gekennzeichnet durch** eine erste Druckmeßeinrichtung (70) zur Messung eines ersten Druckes (p₁) in dem ersten Behälter (10) in Höhe der Mündung (50) des Verbindungselementes (48).

14. Vorrichtung nach einem der Ansprüche 8 bis 13,
**gekennzeichnet durch** eine zweite Druckmeßeinrichtung (75) zur Messung eines zweiten Druckes (p₂) in dem zweiten Behälter (15) in Höhe der Mündung (55) des Verbindungselementes (48).

15. Vorrichtung nach den Ansprüchen 13 und 14,
**gekennzeichnet durch** eine mit den beiden Druckmeßeinrichtungen (70, 75) verbundene Auswerteeinheit (77) zur Bestimmung der Druckdifferenz zwischen dem ersten Druck (p₁) und dem zweiten Druck (p₂).

16. Vorrichtung nach einem der Ansprüche 8 bis 15,
**dadurch gekennzeichnet, daß** der erste Behälter (10) ein Brennelementlagerbecken oder eine Reaktorgrube eines Kernkraftwerks und der zweite Behälter (15) eine Reaktorgrube bzw. ein Brennelementlagerbecken eines Kernkraftwerks ist.

17. Vorrichtung nach einem der Ansprüche 8 bis 16,
**gekennzeichnet durch** eine Leitung (103) zum Weiterleiten des abgeleiteten Fluides (A) zu einer Aufbereitungsanlage (105), in der in dem Fluid (A) enthaltenes Wasser (D) von einer in dem Fluid (A) enthaltenen Bor-haltigen Substanz (B) trennbar ist.

18. Vorrichtung nach einem der Ansprüche 8 bis 17,
**gekennzeichnet durch** ein an einem ersten Zulauf (30) in den ersten Behälter (10) angebrachtes erstes Dosierventil (31), mit dem ein vorgebbarer erster Fluidstrom (I₁) einstellbar ist.

19. Vorrichtung nach einem der Ansprüche 8 bis 18,
**gekennzeichnet durch** ein an einem zweiten Zulauf (35) in den zweiten Behälter (15) angebrachtes zweites Dosierventil (36), mit dem ein vorgebbarer zweiter Fluidstrom (I₂) einstellbar ist.

## Claims

1. Method for the transfer of an object (62), in particular a nuclear fuel element, from a fluid-filled first container (10) into a fluid-filled second container (15), or in the opposite direction, with the interior spaces (43, 44) of the containers (10, 15) being connected by means of a connecting element (48) and a transportation device (60) being provided to move the object (62) through the connecting element (48), **characterized in that** a first fluid flow (110) which flows out of the first container (10) is maintained in a first portion (90) of the connecting element (48) that faces the first container (10), whilst the object (62), with maintenance of the first fluid flow (110), is transported through the connecting element (48).

2. Method according to claim 1, **characterized in that** whilst the object (62) is being transported through the connecting element (48) a second fluid flow (115) that flows out of the second container (15) is maintained in a second portion (95) of the connecting element (48) that faces the second container (15).

3. Method according to claim 1 or 2, **characterized in that** before the first fluid flow (110) or the second fluid flow (115) respectively or the first fluid flow (110) and the second fluid flow (115) is/are generated a substantially identical static pressure (p₁≈p₂) is set at a first opening (50) of the connecting element (48) in the first container (10) and at a second opening (55) of the connecting element (48) in the second container (15).

4. Method according to one of claims 1 to 3, **characterized in that** a fluid (A) is drawn off out of the connecting element (48).

5. Method according to claim 4, **characterized in that** fluid is fed to one of the containers (10, 15) with a current intensity (I₁, I₂), and fluid that has the same current intensity (I₁, I₂) is drawn off out of the connecting element (48).

6. Method according to claim 4, **characterized in that** fluid is fed to the first container (10) with a first current intensity (I₁) and to the second container (15) with a second current intensity (I₂), and fluid (A) is drawn off out of the connecting element (48) with an extraction current intensity (I_{E}) that corresponds to the sum of the current intensities (I₁, I₂) of fluid fed to the containers (10, 15).

7. Method according to one of claims 1 to 6, **characterized in that** a nuclear fuel element is transferred from the first container (10), which is the reactor pit of a nuclear power station, into the second container (15), which is the fuel-element storage basin of a nuclear power station, or in the opposite direction.

8. Device for the transfer of an object (62), in particular a nuclear fuel element, from a fluid-filled first container (10) into a fluid-filled second container (15), or in the opposite direction,
- having a connecting element (48) which connects the interior spaces (43, 44) of the containers (10, 15), and
- a transportation device (60) for moving the object (62) through the connecting element (48), preferably for carrying out the method according to one of claims 1 to 7, **characterized in that** an extraction arrangement (99) for drawing off fluid (A) is located at the connecting element (48).

9. Device according to claim 8, **characterized in that** the extraction arrangement (99) comprises a measuring and/or setting device (99F) for measuring or setting an extraction current intensity (I_{E}).

10. Device according to claim 8 or 9, **characterized by** a collecting container (101) for receiving the fluid (A) which has been drawn off.

11. Device according to one of claims 8 to 10, **characterized in that** the extraction arrangement (99) comprises an extraction line (99A) which is guided upwards as far as an apex point (99C).

12. Device according to claim 11, **characterized in that** the apex point (99C) is located slightly below a fluid level (20, 25) in one of the containers (10 or 15 respectively).

13. Device according to one of claims 8 to 12, **characterized by** a first pressure-measuring device (70) for measuring a first pressure (p₁) in the first container (10) at the level of the opening (50) of the connecting element (48).

14. Device according to one of claims 8 to 13, **characterized by** a second pressure-measuring device (75) for measuring a second pressure (p₂) in the second container (15) at the level of the opening (55) of the connecting element (48).

15. Device according to claims 13 and 14, **characterized by** an evaluating unit (77) which is connected to the two pressure-measuring devices (70, 75) in order to determine the pressure difference between the first pressure (p₁) and the second pressure (p₂).

16. Device according to one of claims 8 to 15, **characterized in that** the first container (10) is a fuel-element storage basin or a reactor pit of a nuclear power station, and the second container (15) is a reactor pit or a fuel-element storage basin of a nuclear power station.

17. Device according to one of claims 8 to 16, **characterized by** a line (103) for conveying the fluid (A) that has been drawn off to a treatment plant (105) in which water (D) contained in the fluid (A) can be separated from a boron-containing substance (B) that is contained in the fluid (A).

18. Device according to one of claims 8 to 17, **characterized by** a first dosing valve (31) which is provided at a first inlet (30) into the first container (10) and with which a first fluid current (I₁) that can be predetermined can be adjusted.

19. Device according to one of claims 8 to 18, **characterized by** a second dosing valve (36) which is provided at a second inlet (35) into the second container (15) and with which a second fluid current (I₂) that can be predetermined can be adjusted.

## Revendications

1. Procédé de transfert d'un objet (62), notamment d'un assemblage combustible nucléaire, d'une première cuve (10) emplie de fluide dans une deuxième cuve (15) emplie de fluide ou en sens opposé, les intérieurs (43, 44) des cuves (10, 15) communiquant par un élément (48) de mise en communication, et un dispositif (60) de transport étant prévu pour déplacer l'objet (62) dans l'élément (48) de mise en communication, **caractérisé en ce que** l'on maintient, dans une première partie (90), tournée vers la première cuve (10), de l'élément (48) de mise en communication un premier courant (110) de fluide sortant de la première cuve, tandis que l'on transporte l'objet (62) dans l'élément (48) de mise en communication en maintenant le premier courant (110) de fluide.

2. Procédé suivant la revendication 1, **caractérisé en ce que** pendant le transport de l'objet (62) dans l'élément (48) de mise en communication, on maintient, dans une deuxième partie (95), tournée vers la deuxième cuve (15), de l'élément (48) de mise en communication, un deuxième courant (115) de fluide sortant de la deuxième cuve (15).

3. Procédé suivant la revendication 1 ou 2, **caractérisé en ce qu'**avant la production du premier courant (110) de fluide ou du deuxième courant (115) de fluide ou du premier courant (110) de fluide et du deuxième courant (115) de fluide, on établit sur une première embouchure (50) de l'élément (48) de mise en communication, dans la première cuve (10) et sur une deuxième embouchure (55) de l'élément (48) de mise en communication dans la deuxième cuve (15), une pression (p₁≈p₂) statique sensiblement identique.

4. Procédé suivant l'une des revendications 1 à 3, **caractérisé en ce que** l'on dérive un fluide (A) de l'élément (48) de mise en communication.

5. Procédé suivant la revendication 4, **caractérisé en ce que** l'on envoie du fluide en une intensité (I₁, I₂) de courant à l'une des cuves (10, 15) et que l'on dérive du fluide (A) de l'élément (48) de mise en communication en la même intensité (I₁, I₂) de courant.

6. Procédé suivant la revendication 4, **caractérisé en ce que** l'on envoie du fluide à la première cuve (10) en une première intensité (I₁) de courant et à la deuxième cuve (15) en une deuxième intensité (I₂) de courant et on dérive de l'élément (48) de mise en communication du fluide (A) en une intensité (I_{E}) de courant prélevée qui correspond à la somme des intensité (I₁, I₂) de courant du fluide renvoyé par les cuves (10, 15).

7. Procédé suivant l'une des revendications 1 à 6, **caractérisé en ce que** l'on transfère un assemblage combustible nucléaire de la première cuve (10) qui est la fosse du réacteur d'une centrale nucléaire à la deuxième cuve (15) qui est le bassin de stockage d'assemblages combustibles d'une centrale nucléaire, ou inversement.

8. Installation de transfert d'un objet (62), notamment d'un assemblage combustible nucléaire, d'une première cuve (10) emplie de fluide à une deuxième cuve (15) emplie de fluide ou inversement,
- comprenant un élément (48) de mise en communication mettant les intérieurs (43, 44) des cuves (10, 15) en communication, et
- un dispositif (60) de transport destiné à déplacer l'objet (62) dans l'élément (48) de mise en communication,
de préférence pour la mise en oeuvre du procédé suivant l'une des revendications 1 à 7,
**caractérisée en ce qu'**il se trouve, sur l'éiément (48) de mise en communication, un dispositif (99) de prélèvement pour dériver du fluide (A).

9. Installation suivant la revendication 8, **caractérisée en ce que** le dispositif (99) de prélèvement comprend un dispositif (99F) de mesure et/ou de réglage pour la mesure et/ou le réglage d'une intensité (I_{E}) de courant de prélèvement.

10. Installation suivant la revendication 8 ou 9, **caractérisée par** une cuve (101) collectrice de réception du fluide (A) dérivé.

11. Installation suivant l'une des revendications 8 à 10, **caractérisée en ce que** le dispositif (99) de prélèvement comprend un conduit (99A) de prélèvement qui va vers le haut jusqu'à un point (99C) de crête.

12. Installation suivant la revendication 11, **caractérisée en ce que** le point (99C) de crête se trouve légèrement en dessous d'un niveau (20, 25) de fluide dans l'une des cuves (10 ou 15).

13. Installation suivant l'une des revendications 8 à 12, **caractérisée par** un premier dispositif (70) de mesure de la pression destiné à mesurer une première pression (p₁) dans la première cuve (10) au niveau de l'embouchure (50) de l'élément (48) de mise en communication.

14. Installation suivant l'une des revendications 8 à 13, **caractérisée par** un deuxième dispositif (75) de mesure de la pression destiné à mesurer une deuxième pression (p₂) dans la deuxième cuve (15) au niveau de l'embouchure (55) de l'élément (48) de mise en communication.

15. Installation suivant les revendications 13 et 14, **caractérisée par** une unité (77) d'interprétation reliée aux deux dispositifs (70, 75) de mesure de la pression et destinée à déterminer la différence de pression entre la première pression (p₁) et la deuxième pression (p₂).

16. Installation suivant l'une des revendications 8 à 15, **caractérisée en ce que** la première cuve est un bassin de stockage d'assemblages combustibles ou une fosse d'un réacteur ou d'une centrale nucléaire et la deuxième cuve (15) est une fosse de réacteur ou un bassin de stockage d'assemblages combustibles d'une centrale nucléaire.

17. Installation suivant l'une des revendications 8 à 16, **caractérisée par** un conduit (103) pour envoyer le fluide (A) dérivé à une installation (105) de traitement, dans laquelle l'eau contenue dans le fluide (A) peut être séparée d'une substance borée contenue dans le fluide (A).

18. Installation suivant l'une des revendications 8 à 17, **caractérisée par** une première vanne (31) de dosage qui est montée sur une première entrée (30) de la première cuve (10) par laquelle il peut être réglé un premier courant (I₁) de fluide prescrit.

19. Installation suivant l'une des revendications 8 à 18, **caractérisée par** une deuxième vanne (36) de dosage qui est montée sur une deuxième entrée (35) de la deuxième cuve (15) et par laquelle il peut être réglé un deuxième courant (I₂) de fluide qui peut être prescrit.
